# EUROPÄISCHE PATENTANMELDUNG

(11) **EP 1 413 853 A1**
(43) Veröffentlichungstag der Anmeldung: **28.04.2004**
(21) Anmeldenummer: 03010566.2
(22) Anmeldetag: 12.05.2003
(51) Int. Cl.: G01C 9/00, B60R 25/10

(54) **Neigungssensor und dessen Verwendung**

(30) Priorität: 25.10.2002 DE 10249752
(71) Anmelder: ROBERT BOSCH GMBH, 70442 Stuttgart (DE)
(72) Erfinder: Siegle, Henrik, 71229 Leonberg (DE); Kittel, Hartmut, 71287 Weissbach-Flacht (DE)

(57) **Zusammenfassung**

Es wird ein Neigungssensor (10) vorgeschlagen, wobei ein dem Erdmagnetfeld (B_{E}) ausgesetztes, in einer Ebene (24, 25) angeordnetes magnetoresistives Sensorelement (22, 23) zur Abgabe von Signalen vorgesehen ist, und wobei Mittel vorgesehen sind, mit denen mit diesen Signalen eine Neigung und/oder eine zeitliche Änderung einer Neigung der Ebene (24, 25) relativ zu der Richtung des Erdmagnetfeldes (B_{E}) bestimmbar ist. Der Neigungssensor (10) eignet sich besonders zum Einsatz in einer Einrichtung zur Diebstahlsicherung, einer elektronischen Parkbremseinrichtung oder in einer Einrichtung zur Anfahrhilfe, insbesondere am Berg, in einem Kraftfahrzeug oder in einem anderen hinsichtlich seiner Lage im Raum als Funktion der Zeit veränderbaren Körper.

## Beschreibung

Die Erfindung betrifft einen Neigungssensor sowie dessen Verwendung nach der Gattung des Hauptanspruches.

### Stand der Technik

Zum Schutz vor Diebstahl sind Fahrzeuge vielfach mit elektronischen Wegfahrsperren ausgestattet. Diese verhindern jedoch nicht einen Diebstahl durch Abschleppen. Aus diesem Grund setzen Fahrzeughersteller Anti-Diebstahl-Systeme mit Neigungssensoren ein, wobei die in Europa üblichen Lastenhefte für diese Sensoren als Grenze eine Messung von 3° Neigungsänderung innerhalb von 3 Minuten vorsehen.

Großbauende Neigungssensoren, die auf einer elektrolytischen Flüssigkeit basieren, erfüllen zwar dieses Empfindlichkeitskriterium, jedoch ist ihr Neigungsarbeitsbereich begrenzt. Insbesondere geschieht gelegentlich, dass ein Fahrzeug an einer derart steilen Straße abgestellt wird, dass der Sensor außerhalb seines Toleranzbereiches gerät. Daneben weisen solche flüssigkeitsbasierten Neigungssensoren Nachteile bei hohen und/oder stark schwankenden Umgebungstemperaturen auf.

Eine Alternative zu Neigungssensoren auf der Basis einer elektrolytischen Flüssigkeit sind sogenannte "Nieder-g-Beschleunigungssensoren", das heißt Beschleunigungssensoren beispielsweise auf Basis der Silizium-Mikromechanik, die auch geringe Änderungen der Erdbeschleunigung oder einer sonstigen, auf das Sensorelement einwirkenden Beschleunigung detektieren können. Diese Beschleunigungssensoren sind jedoch vergleichsweise teuer.

Aufgabe der vorliegenden Erfindung war die Bereitstellung eines preiswerten und zuverlässig arbeitenden Neigungssensors, der die geforderte Auflösung von 3° Neigungsänderung innerhalb von 3 Minuten erfüllt.

### Vorteile der Erfindung

Der erfindungsgemäße Neigungssensor hat gegenüber dem Stand der Technik den Vorteil, dass er sehr kostengünstig und robust ist, und dass er gleichzeitig einen sehr großen Winkelmessbereich aufweist. Weiter ist sein Betrieb zeitunabhängig, da keine Beschleunigungsmessung erfolgen muss, so dass die gewünschte Detektion einer Neigungsänderung von 3° auch noch nach Stunden oder innerhalb eines Zeitraums von Stunden detektiert werden kann.

Daneben ist bei dem erfindungsgemäßen Neigungssensor vorteilhaft, dass vor allem dann, wenn man lediglich an der Erfassung einer Neigungsänderung als Funktion der Zeit interessiert ist, keine hohen Anforderungen an die Aufbau- und Verbindungstechnik des Neigungssensors gestellt werden.

Vorteilhafte Weiterbildungen der Erfindung ergeben sich aus den in den Unteransprüchen genannten Maßnahmen.

So ist besonders vorteilhaft, wenn der Neigungssensor ein magnetoresistives Sensorelement auf der Grundlage des GMR-Effektes oder des AMR-Effektes aufweist (GMR = "Giant Magneto Resistance", AMR = "Anisotropic Magneto Resistance"), da mit derartigen magnetoresistiven Sensorelementen auch eine Erfassung kleinster Magnetfelder bis in den Subµ-Tesla-Bereich, d.h. eine Erfassung von Magnetfeldern einer Stärke von weniger als 1 µTesla, möglich ist. Mit diesen magnetoresistiven Sensorelementen ist es besonders leicht möglich, eine Neigung oder eine zeitliche Änderung einer Neigung relativ zu der Richtung des vergleichsweise schwachen Erdmagnetfeld zu detektieren, ohne gleichzeitig großen oder kostenintensiven Aufwand hinsichtlich der Signalverarbeitung oder Auswerteelektronik zu betreiben.

Sofern lediglich eine Neigungsänderung zu erfassen ist und nicht ein absoluter Neigungswinkel gemessen werden soll, genügen vorteilhaft in der Regel amplitudenmessende magnetoresistive Sensorelemente.

Wird auch eine absolute Neigungswinkelmessung gewünscht, so ist es vorteilhaft, mindestens zwei, dem Erdmagnetfeld ausgesetzte magnetoresistive Sensorelemente vorzusehen, wobei ein erstes magnetoresistives Sensorelement in einer ersten Ebene und ein zweites magnetoresistives Sensorelement in einer zweiten, zu der ersten Ebenen nicht parallelen oder identischen Ebene angeordnet ist. Besonders vorteilhaft ist, wenn die erste Ebene zu der zweiten Ebene senkrecht oder zumindest nahezu senkrecht angeordnet ist.

Weiter ist es alternativ oder zusätzlich bei der Messung eines absoluten Neigungswinkels vorteilhaft, wenn innerhalb mindestens einer der Ebenen zwei magnetoresistive Sensorelemente vorgesehen sind, die beispielsweise nach Art einer Wheatstone'schen Brücken-schaltung miteinander verschaltet sind, und wobei eines dieser Elemente bevorzugt ein sinusförmiges Signal und das andere bevorzugt ein cosinusförmiges Signal bei einem sich drehenden externen Magnetfeld bereitstellt. Ähnliche Anordnungen sind aus dem Bereich magnetischer Winkelsensoren, der magnetischen Strommessung, bei der Verkehrszählung oder auch als Kompass bekannt.

Magnetoresistive Sensorelemente, insbesondere auf Grundlage des GMR-Effektes oder des AMR-Effektes, messen die Komponente des Erdmagnetfeldes, die in der Ebene des betreffenden magnetoresistiven Sensorelementes liegt. Um daher auch dort sicher messen zu können, wo das Erdmagnetfeld zufälligerweise parallel zu dieser Ebene des magnetoresistiven Sensorelementes orientiert ist, d.h. wo die Inklination des Erdmagnetfeldes relativ zu dieser Ebene 0° beträgt oder ein Kraftfahrzeug mit dem Neigungssensor gerade entsprechend schief geparkt ist, ist auch unter diesem Aspekt vorteilhaft, wenn der Neigungssensor mindestens zwei, in unterschiedlichen Ebenen zueinander angebrachte magnetoresistive Sensorelemente aufweist. Bevorzugt wird dann jeweils dasjenige magnetoresistive Sensorelement mit Hilfe entsprechender Auswertemittel ausgewertet, welches eine höhere Signaländerung liefert.

### Zeichnungen

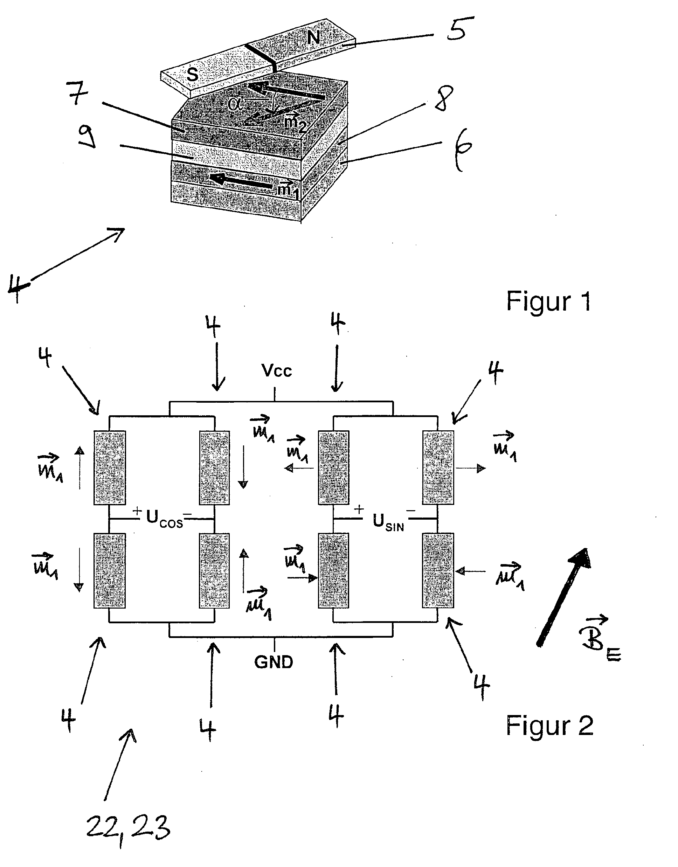

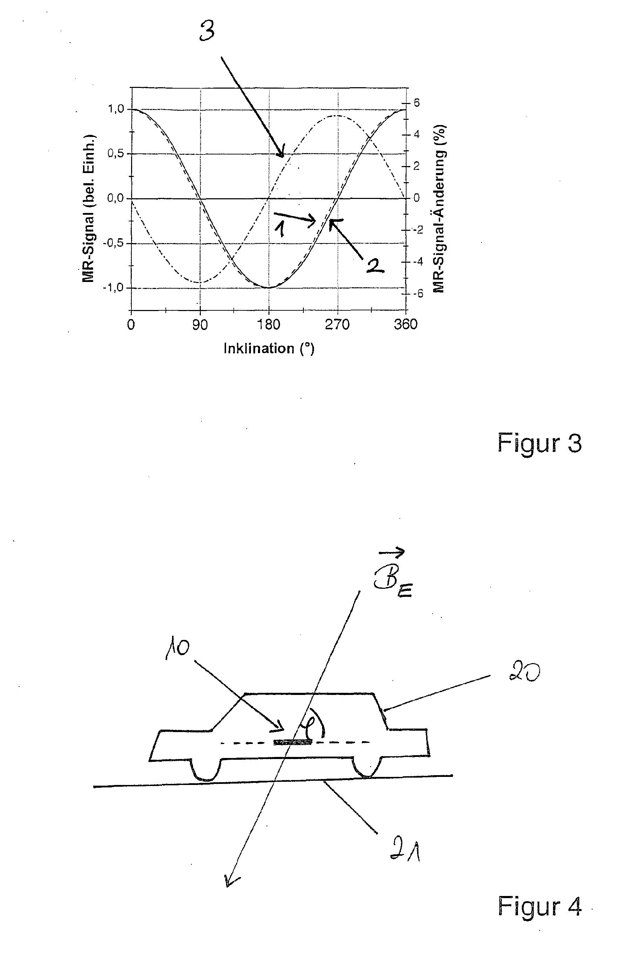

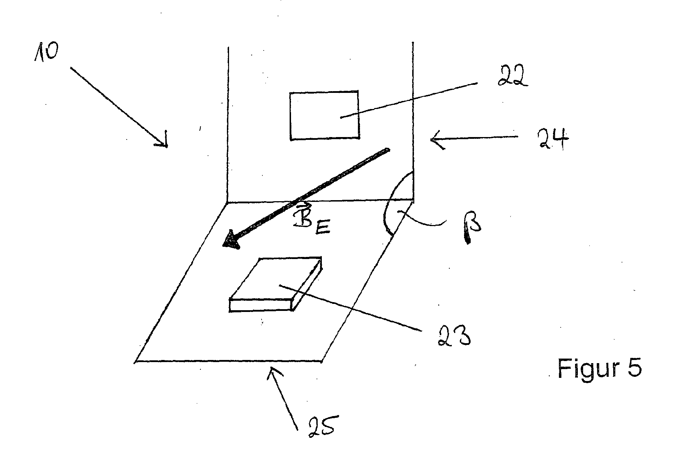

Die Erfindung wird anhand der Zeichnungen und in der nachfolgenden Beschreibung näher erläutert. Es zeigt Figur 1 den prinzipiellen Aufbau eines Schichtsystems auf der Grundlage des GMR-Effektes, das einem externen Magnetfeld ausgesetzt ist, Figur 2 eine Möglichkeit zur Verschaltung mehrerer Schichtsysteme gemäß Figur 1 zu einem magnetoresistiven Sensorelement, und Figur 3 die Abhängigkeit des von einem magnetoresistiven Schichtsystem gemäß Figur 1 abgegebenen Signals als Funktion der Inklination für einen Neigungssensor in einer ersten Position und einer gegenüber dieser ersten Position um 3° verkippten bzw. geneigten zweiten Position, sowie die Differenz beider Signale in Prozent. Die Figur 4 zeigt die Anordnung des Neigungssensors in einem Kraftfahrzeug unter dem Einfluss des Erdmagnetfeldes, während Figur 5 ein Ausführungsbeispiel eines Neigungssensors mit Sensorelementen in verschiedenen Ebenen zeigt.

### Ausführungsbeispiele

Der im Folgenden erläuterte Neigungssensor 10, der bevorzugt in einem Fahrzeug 20 fahrzeugfest angeordnet ist, basiert auf einem magnetisch arbeitenden Winkelsensor. Dabei wird beispielsweise in dem Fall, dass das Fahrzeug 20 mit dem Neigungssensor 10 zum Stehen kommt, der Einfallswinkel des Erdmagnetfeldes B_{E}, die sogenannte Inklination, am Ortes des Neigungssensors 10 gemessen. Diesen Wert meldet der Neigungssensor 10 einem Steuergerät in dem Fahrzeug 20 entweder in Form eines absoluten Neigungswinkels, und/oder er überwacht eine Änderung dieses Neigungswinkels als Funktion der Zeit, beispielsweise im Zusammenwirken mit einer Einrichtung zur Diebstahlsicherung des Fahrzeugs 20.

Weiterhin kann der Neigungssensor 10 auch in einer elektrischen Parkbremseinrichtung eingesetzt werden, die abhängig von einer Schrägstellung des Fahrzeuges 20 eine notwendige Bremskraft bereitstellt. Dies ermöglicht es, Parkbremskräfte an das jeweilige, objektiv gegebene Erfordernis anzupassen, die ansonsten von dem Fahrer des Fahrzeuges 20 beispielsweise durch Ziehen der Handbremse situationsunabhängig oder aufgrund subjektiver Kriterien, und damit vielfach zu gering oder zu hoch, erzeugt werden. Weiterhin erlaubt eine derartige elektronische Parkbremseinrichtung mit dem Neigungssensor 10 im Zusammenwirken mit anderen Baugruppen des Fahrzeuges 20 auch Komfortfunktionen wie beispielsweise ein automatisches Anfahren am Berg.

Im Einzelnen zeigt Figur 1 ein vorzugsweise streifenförmig ausgebildetes magnetoresistives Schichtsystem 4, wobei auf einem nicht dargestellten Substrat zunächst eine antiferromagnetische Schicht 6 beispielsweise aus FeMn, IrMn oder PtMn vorgesehen ist. Auf dieser antiferromagnetischen Schicht 6 befindet sich eine Referenzschicht 8, beispielsweise aus CoFe, mit einer voreingestellten, sich unter dem Einfluss eines externen Magnetfeldes nicht oder zumindest nahezu nicht verändernden Richtung einer Magnetisierung m₁. Auf der Referenzschicht 6 ist eine nichtmagnetische, elektrisch leitfähige Zwischenschicht 9, beispielsweise aus Kupfer, vorgesehen, auf der sich eine Detektionsschicht 7, beispielsweise aus NiFe, befindet. Die Detektionsschicht 7 weist eine Richtung einer resultierenden Magnetisierung m₂ auf, die sich entsprechend der Richtung eines externen Magnetfeldes orientiert, d.h. die Richtung der Magnetisierung m₂ ist stets parallel zu der Richtung der in der Ebene der Detektionsschicht 7 liegenden Komponente des externen Magnetfeldes orientiert. Die Figur 1 zeigt schließlich, wie mit Hilfe eines Magneten 5 die Richtung der Magnetisierung m₂ verändert werden kann, wodurch sich ein Winkel α zwischen der Richtung der Magnetisierung m, und der Richtung der Magnetisierung m₂ als Funktion der Richtung des äußeren Magnetfeldes einstellt.

Insgesamt bildet das Schichtsystem 4 gemäß Figur 1 ein magnetoresistives Schichtsystem auf der Grundlage des GMR-Effektes, das nach dem sogenannten Spin-Valve-Prinzip arbeitet. Alternativ kann das magnetoresistive Schichtsystem 4 jedoch auch ein Schichtsystem sein, das auf der Grundlage des AMR-Effektes arbeitet.

Da die Funktion von magnetoresistiven Schichtsystemen auf der Grundlage des GMR-Effektes bzw. des AMR-Effektes insbesondere zur Winkelsensierung aus dem Stand der Technik, insbesondere aus WO 00/79298 oder EP 0 905 523 A2, hinreichend bekannt ist, und sich der Aufbau gemäß Figur 1 von solchen bekannten magnetoresistiven Schichtsystemen zunächst nicht unterscheidet, soll auf Einzelheiten zum Aufbau und zur Funktion des Schichtsystems 4 hier nicht weiter eingegangen werden.

Die Figur 3 zeigt einerseits auf der linken Ordinatenachse den Verlauf des elektrischen Widerstandes des Schichtsystems 4, oder eines anderen, von dem magnetoresistiven Schichtsystem 4 abgegebenen Signals, das mit elektronischen Auswertemitteln erfasst und weiterverarbeitet werden kann. Es ist in beliebigen Einheiten als Funktion des Winkels der Inklination des Erdmagnetfeldes B_{E} am Ort des Schichtsystems 4 zunächst für ein Schichtsystem 4 in einer ersten oder nicht geneigten Position 2 (siehe durchgezogene Linie in Figur 3), sowie für dieses Schichtsystem 4 in einer gegenüber dieser ersten Position 2 um 3° hinsichtlich dieser Richtung des Erdmagnetfeldes B_{E} verkippten oder geneigten Position 1 (siehe gestrichelte Linie in Figur 3) dargestellt.

Auf der rechten Ordinatenachse in Figur 3 ist andererseits der Signalunterschied 3 durch die Verkippung um 3° in Prozent aufgetragen, der sich aus der Differenz des Signalverlaufes 1 und des Signalverlaufs 2 dividiert durch den Signalverlauf 2, d.h. das Signal vor der Verkippung oder beispielsweise bei 0° Inklination, ergibt.

Man erkennt, dass dieser Signalunterschied 3 abhängig vom Winkel der Inklination zwischen 0 % und ca. 5 % der Signalamplitude schwankt. Weiter ist erkennbar, dass eine Verkippung oder Richtungsänderung von 3° über einen großen Winkelbereich einen Signalunterschied von mehr als 2 % bewirkt. Derartige Signaländerungen sind mit Hilfe des magnetoresistiven Schichtsystems 4 und geeigneten nachgeordneten elektronischen Mitteln zur Auswertung der von diesem abgegebenen Signale ohne Weiteres zuverlässig und kostengünstig erfassbar. Somit eignet sich das magnetoresistive Schichtsystem 4 über einen weiten Inklinationswinkelbereich als Neigungssensor 10.

Die Figur 4 zeigt den Einbau eines Neigungssensors 10 in ein Kraftfahrzeug 20, das auf einer Aufstandsfläche 21 aufsteht, wobei am Ort des Kraftfahrzeuges 20 bzw. des Neigungssensors 10 ein Erdmagnetfeld B_{E} vorliegt, das einen Winkel der Inklination ϕ bezogen auf die Ebene des Neigungssensors 10 aufweist. Die Ebene des Neigungssensors 10 kann dabei, wie gezeichnet, parallel zu der Aufstandsfläche 21 orientiert sein, kann jedoch auch senkrecht dazu orientiert sein, so dass der Neigungssensor vertikal steht, oder einen anderen Winkel mit der Aufstandsfläche bilden.

In einfachster Ausführung genügt es, wenn als Neigungssensor 10 gemäß Figur 4 ein magnetoresistiver Schichtaufbau 4 gemäß Figur 1 eingesetzt, geeignet verschaltet und mit elektronischen Auswertemitteln verbunden wird, die die von dem Schichtsystem 4 abgegebenen Signale, insbesondere eine Änderung des Winkels ϕ als Funktion der Zeit, detektieren.

In bevorzugter Ausführung ist vorgesehen, dass der Neigungssensor 10 mindestens ein Sensorelement 22 gemäß Figur 2 aufweist. Dieses Sensorelement 22 weist innerhalb einer Ebene eine Mehrzahl von magnetoresistiven Schichtsystemen 4 auf der Grundlage des GMR-Effektes auf, von denen jedes bevorzugt die in Figur 2 jeweils zu den einzelnen Schichtsystemen 4 eingezeichnete Richtung der Magnetisierung m, der Referenzschicht 8 besitzt. Alternativ kann das Sensorelement 22 insbesondere innerhalb einer Ebene auch eine Mehrzahl von anisotrop magnetoresistiven Schicht, beispielsweise in Form einer Mehrzahl von Ni₈₁Fe₁₉-Schichten, die auf der Grundlage des AMR-Effektes arbeiten, aufweisen.

Bevorzugt sind wenigstens vier magnetoresistive Schichtsysteme 4 vorgesehen, die in Form einer Wheatstone-Brücke miteinander verschaltet sind. Besonders bevorzugt sind gemäß Figur 2 insgesamt acht magnetoresistive Schichtsysteme 4 vorgesehen, wobei jeweils vier von diesen in Form einer Wheatstone-Brücke miteinander verschaltet sind. Innerhalb der beiden derart erhaltenen Wheatstone'schen Brückenschaltungen weisen die magnetoresistiven Schichtsysteme 4 weiter jeweils paarweise parallel bzw. antiparallel orientierte Richtungen der Magnetisierung m₁ auf. Daneben sind die einzelnen Schichtsysteme 4 gemäß Figur 2 mit einer äußeren Spannungsversorgung V_{CC} derart miteinander verschaltet, dass im Bereich der ersten Wheatstone-Brücke ein cosinusförmiges Spannungssignal U_{cos} und an der zweiten Wheatstone-Brücke ein sinusförmiges Spannungssignal Uₛᵢₙ abgegriffen werden kann. Auf diese Weise lässt sich besonders einfach nicht nur eine Änderung der Neigung der Ebene, in der sich die magnetoresistiven Schichtsysteme 4 gemäß Figur 2 befindet, relativ zu der Richtung des Erdmagnetfeldes B_{E} bestimmen, sondern auch die absolute Neigung dieser Ebene bezüglich der Richtung des Erdmagnetfeldes B_{E},, d.h. der absolute Inklinationswinkel ϕ.

Weitere Details zur Verschaltung von magnetoresistiven Schichtsystemen 4 gemäß Figur 2 sind in anderem Zusammenhang in der Anmeldung DE 102 34 347.0 ausführlich erläutert.

Wie aus Figur 3 erkennbar, eignet sich ein einzelnes magnetoresistives Schichtsystem 4 in der Regel nicht, um den gesamten Winkelbereich zwischen 0° und 360° abzudecken, da in gewissen Winkelbereichen die Signaländerung unterhalb der Nachweisgrenze bzw. sogar bei null (siehe Winkel von 180°) liegt. Weiter kann mit einem einzelnen magnetoresistiven Schichtsystem 4 gemäß Figur 1 nur die Änderung der Komponente der Erdmagnetfeldes B_{E} detektiert werden, die innerhalb der Detektionsschicht 7 liegt. Insofern treten mit einem einzelnen magnetoresistiven Schichtsystem 4 in dem Neigungssensor 10 dann messtechnische Schwierigkeiten auf, wenn das Erdmagnetfeld B_{E} senkrecht oder zumindest nahezu senkrecht zu der Ebene der Detektionsschicht 7 steht bzw., beispielsweise das Fahrzeug 20 entsprechend geparkt ist. Um diese Schwierigkeiten zu umgehen, und eine Erfassung einer Neigung oder einer Änderung der Neigung des Neigungssensors relativ zu der Richtung des Erdmagnetfeldes B_{E} über den vollen Winkelbereich der Inklination von 0° bis 360° abzudecken, ist es vorteilhaft, eine Anordnung gemäß Figur 5 zu wählen. In diesem Fall befindet sich ein erstes, bevorzugt entsprechend Figur 2 oder altemativ auch entsprechend Figur 1 aufgebautes magnetoresistives Sensorelement 23 innerhalb einer ersten Ebene 25, und ein zweites, bevorzugt ebenfalls entsprechend Figur 2 oder alternativ auch entsprechend Figur 1 aufgebautes magnetoresistives Sensorelement 22 innerhalb einer zweiten Ebene 24.

Die erste Ebene 25 und die zweite Ebene 24 schließen einen Winkel β miteinander ein, der von 0° bzw. 360° und 180° verschieden ist. Insbesondere steht die erste Ebene 25 zumindest näherungsweise oder exakt senkrecht auf der zweiten Ebene 24, das heißt, der Winkel β beträgt bevorzugt 90° bzw. 270°oder näherungsweise 90° bzw 270°. Mit einer derartigen Anordnung und Verschaltung der einzelnen Sensorelemente 22, 23 beispielsweise gemäß Figur 2 zu dem Neigungssensor 10 gemäß Figur 5 lassen sich die genannten Schwierigkeiten auch für spezielle Neigungswinkel überwinden.

Bevorzugt wird bei dem Neigungssensor 10 gemäß Figur 5 jeweils dasjenige Sensorelement 22, 23 mit Hilfe der mit diesen verschalteten elektronischen Auswertemitteln ausgewertet, dass die jeweils höhere relative Signaländerung gemäß Figur 3 bei einer Verkippung liefert. Im Übrigen sei noch erwähnt, dass bei dem Aufbau gemäß Figur 5 die räumliche Lage des ersten magnetoresistiven Sensorelementes 23 relativ zu der räumlichen Lage des zweiten magnetoresistiven Sensorelementes 22 bei einer Änderung der Neigung der ersten und/oder der zweiten Ebene 24, 25 relativ zu der Richtung des Erdmagnetfeldes B_{E} unverändert bleiben sollte.

Insofern sind sowohl das erstes Sensorelement 23 als auch das zweite Sensorelement 22 jeweils ortsfest und relativ zueinander fest angeordnet.

## Patentansprüche

1. Neigungssensor, **dadurch gekennzeichnet, dass** ein dem Erdmagnetfeld (B_{E}) ausgesetztes, in einer Ebene (24, 25) angeordnetes magnetoresistives Sensorelement (22, 23) zur Abgabe von Signalen vorgesehen ist, und dass Mittel vorgesehen sind, mit denen mit diesen Signalen eine Neigung und/oder eine zeitliche Änderung einer Neigung der Ebene (24, 25) relativ zu der Richtung des Erdmagnetfeldes (B_{E}) bestimmbar ist.

2. Neigungssensor nach Anspruch 1, **dadurch gekennzeichnet, dass** der Winkel der Inklination des Erdmagnetfeldes (B_{E}) am Ort des Sensorelementes (22, 23) bezogen auf die Ebene (24, 25), in der das Sensorelement (22, 23) angeordnet ist, und/oder dass die Änderung des Winkels der Inklination des Erdmagnetfeldes (B_{E}) als Funktion der Zeit am Ort des Sensorelementes (22, 23) bezogen auf die Ebene (24, 25), in der das Sensorelement (22, 23) angeordnet ist, mit den Mitteln bestimmbar ist.

3. Neigungssensor nach Anspruch 1 oder 2, **dadurch gekennzeichnet, dass** mindestens zwei, dem Erdmagnetfeld (B_{E}) ausgesetzte magnetoresistive Sensorelemente (22, 23) vorgesehen sind, wobei mindestens ein erstes magnetoresistives Sensorelement (23) in einer ersten Ebene (25) und mindestens ein zweites magnetoresistives Sensorelement (22) in einer zweiten, zu der ersten Ebene (25) nicht parallelen oder identischen, insbesondere einer dazu zumindest nahezu senkrechten Ebene (24) angeordnet ist, und wobei mit den Mitteln mit den Signalen des ersten Sensorelementes (23) und/oder den Signalen des zweiten Sensorelementes (22) eine Neigung oder eine zeitliche Änderung einer Neigung der ersten Ebene (25) und/oder der zweiten Ebene (24) relativ zu der Richtung des Erdmagnetfeldes (B_{E}) am Ort der magnetoresistiven Sensorelemente (22, 23) bestimmbar ist.

4. Neigungssensor nach Anspruch 3, **dadurch gekennzeichnet, dass** die räumliche Lage des ersten magnetoresistiven Sensorelementes (23) relativ zu der räumlichen Lage des zweiten magnetoresistiven Sensorelementes (22) bei der Neigung oder der Änderung der Neigung der ersten und/oder der zweiten Ebene (22, 23) relativ zu der Richtung des Erdmagnetfeldes (B_{E}) unverändert bleibt.

5. Neigungssensor nach einem der vorangehenden Ansprüche, **dadurch gekennzeichnet, dass** er fahrzeugfest in einem Fahrzeug (20) angeordnet ist.

6. Neigungssensor nach einem der vorangehenden Ansprüche, **dadurch gekennzeichnet, dass** eine Änderung einer Neigung von 3° innerhalb von 3 Minuten erfassbar ist.

7. Neigungssensor nach einem der vorangehenden Ansprüche, **dadurch gekennzeichnet, dass** in der ersten Ebene (25) und/oder der zweiten Ebene (24) jeweils eine Mehrzahl von magnetoresistiven Schichtsystemen (4) vorgesehen ist, von denen jeweils zumindest ein Teil zu dem in der betreffenden Ebene befindlichen magnetoresistiven Sensorelement (22, 23), insbesondere in Form einer Wheatstone-Brücke, verschaltet sind,

8. Neigungssensor nach einem der vorangehenden Ansprüche, **dadurch gekennzeichnet, dass** mindestens eines, insbesondere alle, der magnetoresistiven Sensorelemente (22, 23), ein GMR-Sensorelement oder ein AMR-Sensorelement ist.

9. Neigungssensor nach Anspruch 7, **dadurch gekennzeichnet, dass** mindestens eines, insbesondere alle, der magnetoresistiven Schichtsysteme (4) ein GMR-Schichtsystem, insbesondere nach dem Spin-Valve-Prinzip, oder ein AMR-Schichtsystem ist.

10. Verwendung des Neigungssensors in einer Einrichtung zur Diebstahlsicherung, einer elektronischen Parkbremseinrichtung oder in einer Einrichtung zur Anfahrhilfe, insbesondere am Berg, in einem Kraftfahrzeug oder in einem anderen hinsichtlich seiner Lage im Raum als Funktion der Zeit veränderbaren Körper.
